# EUROPEAN PATENT SPECIFICATION

(11) **EP 0 349 144 B1**
(45) Date of publication and mention of the grant of the patent: **07.09.1994**
(21) Application number: 89305943.6
(22) Date of filing: 13.06.1989
(51) Int. Cl.: G02B 27/28, G02B 5/18

(54) **Birefringence diffraction grating type polarizer**
Doppelbrechender Gitterpolarisator
Polarisateur biréfringeant à réseau de diffraction

(30) Priority: 29.06.1988 JP 164049/88
(43) Date of publication of application: 03.01.1990
(73) Proprietor: NEC CORPORATION, Tokyo (JP)
(72) Inventor: Urino, Yutaka c/o NEC Corporation, Minato-ku Tokyo (JP)
(74) Representative: Abnett, Richard Charles

(56) References cited:
- EP-A- 0 039 125
- JP-A- 1 107 206
- PATENT ABSTRACTS OF JAPAN, vol. 10, no. 41 (P-429)[2098], 18th February 1986 ; & JP-A-60 188 911
- PATENT ABSTRACTS OF JAPAN, vol. 12, no. 276 (P-737)[3123], 30th July 1988 ; & JP-A-63 055 501

## Description

### FIELD OF THE INVENTION

This invention relates to a birefringence diffraction grating type polarizer. Such a polarizer may be useful for various optical instruments making use of a LASER diode.

### BACKGROUND OF THE INVENTION

A polarizer element, particularly a polarizing beam splitter, is an element in which specifically polarized light is obtained by changing the direction of light propagation between polarized light beams perpendicular to each other. Such an element is used as a component for constructing an optical isolator or an optical circulator in a light source module for an optical fiber communication system, an optical head for an optical disc, and so on.

A conventional polarizing beam splitter such as a Glan-Thompson prism or Rochon prism is an element in which a light path is split based on the difference between the refraction angles or the total reflection angles of two orthogonally polarized light components at the reflection plane of a crystal with large birefringence, or an element in which light is totally reflected or transmitted in accordance with the difference of refractive indices of polarized light in a multilayer dielectric film formed at the reflection plane of a total reflection prism consisting of an isotropic optical medium, such as glass.

With such a conventional polarizer element, however, there is a disadvantage that the size is large because the configuration is a cube having a side as long as √2 times the diameter of a transmitting light beam. This is because the conventional polarizer element has a reflection boundary surface which is positioned to be at a slant relative to the light axis by at least 45 degrees. In more detail, where the conventional polarizer element is applied to an optical disc for recording and reproducing, the transmitting light beam is large in size so that the configuration is a cube having a side of 8 to 10 mm.

Another type of known polarizer element is disclosed in "National conference record, 1982, Optical & Radio wave Electronics, the Institute of Electronics & Communication Engineers of Japan, Part 2". This known polarizer element consists of a birefringent tapered plate of Rutile (Ti0₂) having a tapered angle of 4 degrees. When a parallel light beam is incident on the birefringent tapered plate on one side thereof, the parallel light beam is subject to different refractions as between the extraordinary component and the ordinary ray component, so that the two components are split on the other side of the birefringent tapered plate with a split angle of approximately 1 degree.

With the birefringent tapered plate, however, there is the disadvantage that the fabricating process is complicated because the cutting of a tapered configuration is difficult on a mass-production basis, and the polishing of a tapered surface is also difficult to be carried out. There is a further disadvantage that Rutile is expensive.

Japanese patent application JP-A-63-55501, on which the claims of the present application are based, describes a diffraction grating type polarising plate providing a thin and small-sized polarizing element. The plate described comprises a lithium niobate crystal plate having elongated ion-exchange regions formed periodically on its main surface. It is alleged that the refractive index of the plate for ordinary rays is not changed in the ion-exchange regions but that the refractive index for extraordinary rays is increased by approximately 0.13.

### SUMMARY OF THE INVENTION

The invention provides a birefringence diffraction grating-type polarizer as defined in the appendant independent claim. Preferred features of the invention are defined in the dependent subclaims.

If an anti-reflection layer of uniform thickness were applied over the whole surface of the prior art polariser described in JP-A-63-55501, it would not be effective in both the ion-exchanged and non-ion-exchanged regions because their refractive indices differ. According to the invention dielectric layers of refractive index proximate or equal to that of the crystal substrate are therefore provided over the ionexchanged regions so that an effective anti-reflection layer of uniform thickness can be applied over the whole surface of the polariser.

Further, in the polarizer according to the invention, it has unexpectedly been recognised that contrary to the teaching of the prior art as exemplified by document JP-A-63-55501, the refractive index of the crystal substrate for the ordinary ray is in fact changed by ion-exchanged regions. Consequently, ordinary rays are undesirably diffracted by a prior art polarizer as described in JP-A-63-55501. As defined in the appendant claims, dielectric layers are therefore provided over the ion-exchanged regions which may advantageously compensate for the change in refractive index for the ordinary ray in order to reduce diffraction of the ordinary ray as described below in respect of an exemplary implementation of the invention.

### BRIEF DESCRIPTION OF THE DRAWINGS

The invention will be explained in more detail by way of example in conjunction with the appended drawings, in which:-
Figure 1 is a cross-sectional view showing a birefringence diffraction grating type polarizer in an embodiment of the invention, and
Figure 2 is a perspective view of the polarizer of Figure 1.

### DESCRIPTION OF THE PREFERRED EMBODIMENTS

Before explaining a birefringence diffraction grating type polarizer embodying the invention, the principle of operation will be briefly explained.

In a polarizer making use of the invention, the reflection between crystal substrate and dielectric film is negligible, because the dielectric film has a refractive index proximate to that of the crystal substrate as described above for a polarizer of the birefringence diffraction grating type. Therefore, the surface of the polarizer is optically to be equivalent to the surface of a single substance. Accordingly, an anti-reflection layer can be provided by simply depositing a conventional anti-reflection layer of a uniform thickness on the crystal substrate. This simplifies significantly the fabricating process for growing the anti-reflection layer. Moreover, the phase condition of the diffraction grating is free from disturbance, because the thickness of the anti-reflection layer is uniform, so that the decrease of extinction ratio and the increase of diffraction loss which usually result from the presence of an anti-reflection layer can be avoided.

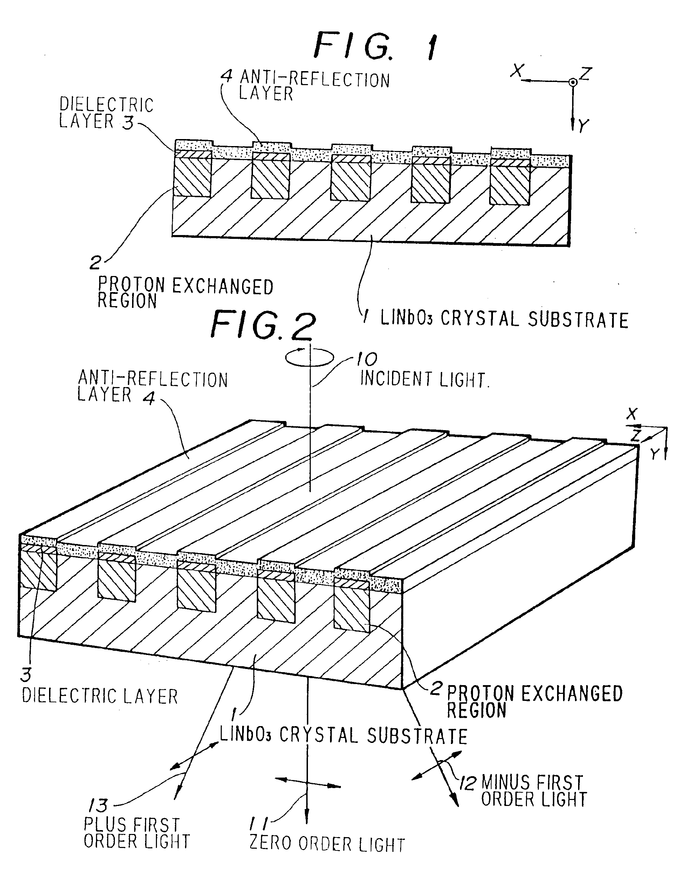

A birefringence diffraction grating type polarizer in the embodiment according to the invention will now be explained with reference to Figures 1 and 2. A crystal substrate 1 having optical anisotropy is formed by a Y cut sheet of lithium niobate (LiNb0₃) in this embodiment. A series of proton exchanged regions 2 are provided regularly or periodically on the substrate 1. On these proton exchanged regions 2 are formed dielectric films 3 each having a refractive index equal to or substantially equal to that of the substrate 1, thereby providing an optical diffraction grating. Dielectric substances having such refractive indices are exemplified by lithium niobate (LiNb0₃), niobium pentoxide (N₂0₅), zirconium dioxide (Zr0₂), zinc sulphide (ZnS), titanium dioxide (Ti0₂), cerium dioxide (Ce0₂), tantalum pentoxide (Ta₂0₅) and tellurium dioxide (Te0₂). An anti-reflection film 4 of a uniform thickness is provided on the substrate 1 and on the dielectric films 3. This anti-reflection film 4 consists of a material having a refractive index approximating to the square root of the refractive index of the substrate 1, and has a uniform thickness equal to a dimension obtained by a calculation in which a light wavelength is divided by a value four times the refractive index of the anti-reflection film 4.

A material having such a refractive index is selected from, for instance, silicon dioxide (Si0₂), calcium fluoride (CaF₂), aluminum fluoride (A1F₃), lanthanum fluoride (LaF₃), strontium fluoride (SrF₂) and magnesium fluoride (MgF₂). The anti-reflection film 4 having such a refractive index reduces the reflection factor between the substrate 1 and the air to "zero", preventing the reflection on portions without the dielectric layer 3. Further, the reflection induced at the boundary between the substrate 1 and the dielectric layer 3 is reduced to be almost "zero" because their refractive indices are almost equal to each other, and the reflection between the dielectric film 3 and the air is reduced to be almost "zero" in the presence of the anti-reflection layer 4 which is provided between the substrate 1 and the air. Therefore, the reflections on the two different substances of the polarizer surface composed of the substrate 1 and the dielectric film 3 are prevented simultaneously by simply depositing the anti-reflection film 4 of a uniform thickness. This anti-reflection film 4 may be composed of multiple layers providing an equivalent phase shift. In the case where the surface of the grating is in contact with an external material other than the air, the refractive index of the anti-reflection film 4 may be nearly equal to the square root of the product between the refractive index of the external material and that of the substrate 1.

In Figure 2 incident light 10 of circular polarization is split as a zero order diffraction light beam 11 of a polarization along the x-axis, and plus and minus order diffraction light beams 12 and 13 of a polarization orthogonal to the polarization of the zero order light beam 11.

The intensity of the zero order diffraction light beam 11 of this diffraction grating is given by the function:${\text{cos ² [nT}}_{\text{p}} {\text{+(n}}_{\text{d}} {\text{-1)T}}_{\text{d}} \text{]/λ}$
where λ represents a light wavelength, n represents the change in the refractive index caused by the proton exchange, Tₚ represents the depth of the proton exchanged regions 2, n_{d} represents the refractive index of the dielectric film 3, and T_{d} represents the thickness of the dielectric film 3. Assuming that the light wavelength is 1.3µm, then the refractive index of the substrate 1 of lithium niobate is about 2.2, and the change in the refractive index in the proton exchanged regions due to the proton exchange process is about +0.10 for the extraordinary ray, and is about -0.04 for the ordinary ray. Therefore, the depth of the proton ion-replacement regions 2 is about 4.6µm, and the thickness of the dielectric films 3 is about 0.16µm, where niobium pentoxide (Nb₂0₅) having a refractive index of about 2.2 is used for the dielectric layer 3, so that the intensity of the zero order diffraction light beam 11 of this grating can be "0" for the extraordinary ray, and "1" for the ordinary ray, whereby the grating functions as a polarizer. If the Si0₂ layer giving a refractive index of 1.45 is used as the anti-reflection layer 4, the thickness of the Si0₂ layer should be about 2200Å.

The proton exchanged regions 2 of 4.6µm in depth can be provided by immersing the lithium niobate substrate 1 in liquified benzoic acid, for example at 250°C for four and a half hours. The niobium oxide film 3 of about 0.16µm in thickness can be provided by sputtering from a Nb₂0₅ target, or by reactive sputtering from a Nb target in oxygen environment. The Si0₂ layer 4 of 2200Å in thickness can be provided by ordinary sputtering.

An angle of diffraction is almost inversely proportional to the pitch of the diffraction grating. Hence, the pitch of the grating is determined so as to obtain an angle of diffraction greater than that required for separating the diffracted light from the non-diffracted light. For instance, the angle of diffraction is 0.74° for a pitch of 100µm, and is 7.5° for a pitch of 10µm, respectively, where the wavelength is 1.3µm.

In this way a polarizer which is thin and of a low price can be obtained, since it can be fabricated from a thin lithium niobate sheet crystal in a mass by batch process. Thus the birefringence diffraction grating type polarizer illustrated has the advantages that it can be made small in size and can be of low material cost. Furthermore it can be fabricated by a relatively simple process.

As described above, it is seen that light reflection can be avoided simply by disposing an anti-reflection layer of a single material having a uniform thickness on a substrate provided with a series of proton exchanged regions thereon, thereby simplifying the fabricating process thereof. The uniform thickness of the anti-reflection layer prevents the disturbance of the phase condition in the diffraction grating, so that a sheet type polarizing element with a high extinction ratio and a low insertion loss is readily obtained.

Although the invention has been described with respect to a specific embodiment for complete and clear disclosure, the appended claims are not thus limited to it but are to be construed as embodying all modification and alternative constructions that fall within the scope of the claims.

## Claims

1. A birefringence diffraction grating type polarizer:
comprising,
an optically anisotropic sheet crystal substrate (1) having periodic ion-exchanged regions (2) to provide an optical diffraction grating;
characterised in that;
dielectric layers (3) are provided over said ion-exchanged regions, said dielectric layers (3) having a refractive index proximate or equal to that of said crystal substrate; and
an anti-reflection layer (4) of a uniform thickness is provided over the whole surface of said crystal substrate and said dielectric layers.

2. A birefringence diffraction grating type polarizer as defined in claim 1, wherein said dielectric layers (3) are of a substance selected from lithium niobate, niobium pentoxide, zirconium oxide, zinc sulphide (ZnS), titanium dioxide (Ti0₂), cerium dioxide (Ce0₂), tantalum pentoxide (Ta₂0₅) and tellurium oxide.

3. A birefringence diffraction grating type polarizer as defined in claim 1 or 2, wherein said anti-reflection layer (4) is of a material of a refractive index substantially equal to the square root of the refractive index of said sheet crystal substrate.

4. A birefringence diffraction grating type polarizer as defined in claim 1, 2 or 3, wherein said anti-reflection layer (4) is of a thickness determined by a calculation in which a light wavelength is divided by a value four times the refractive index of said anti-reflection layer.

5. A birefringence diffraction grating type polarizer as defined in any of claims 1 to 4, wherein said anti-reflection layer (4) is of a material selected from silicon dioxide, calcium fluoride (CaF₂), alumium fluoride (A1F₃), lanthanum fluoride (LaF₃), strontium fluoride (SrF₂) and magnesium fluoride.

6. A birefringence diffraction grating type polarizer as defined in any preceding claim, in which the dimensions of the ion -exchanged regions and the dielectric layers are selected in view of their refractive indices so that the polarizer does not substantially diffract the ordinary ray component of light with which the polarizer is intended to be used.

## Patentansprüche

1. Doppelbrechender Gitterpolarisator mit:
einem bahnenförmigen, optisch anisotropen Kristallsubstrat (1) mit periodischen ionenausgetauschten Bereichen (2) zur Bildung eines optischen Beugungsgitters,
dadurch gekennzeichnet, daß
dielektrische Schichten (3) über den ionenausgetauschten Bereichen vorgesehen sind, wobei der Brechungsindex der dielektrischen Schichten (3) annähernd gleich oder gleich dem des Kristallsubstrats ist, und
eine Antireflexionsschicht (4) gleichförmiger Dicke auf der gesamten Oberfläche des Kristallsubstrats und der dielektrischen Schichten vorgesehen ist.

2. Doppelbrechender Gitterpolarisator nach Anspruch 1, wobei die dielektrischen Schichten (3) aus einem Material der folgenden Gruppe ausgewählt sind: Lithiumniobat, Niobpentoxid, Zirkonoxid, Zinksulfid (ZnS), Titandioxid (TiO₂), Cerdioxid (CeO₂), Tantalpentoxid (Ta₂O₅) und Telluroxid.

3. Doppelbrechender Gitterpolarisator nach Anspruch 1 oder 2, wobei die Antireflexionsschicht (4) aus einem Material mit einem Brechungsindex besteht, der im wesentlichen gleich der Quadratwurzel des Brechungsindex des bahnenförmigen Kristallsubstrats ist.

4. Doppelbrechender Gitterpolarisator nach Anspruch 1, 2 oder 3, wobei die Dicke der Antireflexionsschicht (4) gleich einer Lichtwellenlänge dividiert durch den vierfachen Brechungsindex der Antireflexionsschicht ist.

5. Doppelbrechender Gitterpolarisator nach einem der Ansprüche 1 bis 4, wobei das Material der Antireflexionsschicht (4) ausgewählt ist aus der Gruppe mit Siliciumdioxid, Calciumfluorid (CaF₂), Aluminiumfluorid (AlF₂), Lanthanfluorid (LaF₃), Strontiumfluorid (SrF₂) und Magnesiumfluorid.

6. Doppelbrechender Gitterpolarisator nach einem der vorstehenden Ansprüche, wobei die Abmessungen der ionenausgetauschten Bereiche und der dielektrischen Schichten unter Berücksichtigung ihrer Brechungsindices derart ausgewählt sind, daß der Polarisator die ordentliche Strahlkomponente des Lichts, mit dem der Polarisator betrieben werden soll, nicht wesentlich beugt.

## Revendications

1. Polariseur du type à réseau de diffraction biréfringent, comprenant :
un substrat cristallin en feuille anisotrope optiquement (1) ayant des régions d'échange d'ion périodiques (2) pour procurer un réseau de diffraction optique,
caractérisé en ce que,
des couches diélectriques (3) sont prévues sur lesdites régions à échange d'ion, lesdites couches diélectriques ayant un indice de réfraction proche ou égal à celui dudit substrat cristallin, et
une couche anti-réfléchissante (4) d'une épaisseur uniforme est placée sur la surface entière dudit substrat cristallin et desdites couches diélectriques.

2. Polariseur du type à réseau de diffraction biréfringent selon la revendication 1, dans lequel lesdites couches diélectriques (3) sont d'une substance sélectionnée parmi le niobate de lithium, le pentoxyde de niobium, l'oxyde de zirconium, le sulfure de zinc (ZnS), le dioxyde de titane (Ti0₂), le dioxyde de cérium (CeO₂), le pentoxyde de tantale (Ta₂O₅) et l'oxyde de tellurium.

3. Polariseur du type à réseau de diffraction biréfringent selon la revendication 1 ou 2, dans lequel ladite couche anti-réfléchissante (4) est d'un matériau ayant un indice de réfraction pratiquement égal à la racine carrée de l'indice de réfraction dudit substrat cristallin en feuille.

4. Polariseur du type à réseau de diffraction biréfringent selon la revendication 1, 2 ou 3, dans lequel ladite couche anti-réfléchissante (4) est d'une épaisseur déterminée par un calcul dans lequel la longueur d'onde de la lumière est divisée par une valeur qui est de quatre fois l'indice de réfraction de ladite couche anti-réfléchissante.

5. Polariseur du type à réseau de diffraction biréfringent selon l'une quelconque des revendications 1 à 4, dans lequel ladite couche anti-réfléchissante (4) est constituée d'un matériau sélectionné parmi le dioxyde de silicium, le fluorure de calcium (CaF₂), le fluorure d'aluminium (AlF₃), le fluorure de lanthane (LaF₃), le fluorure de strontium (SrF₂) et le fluorure de magnésium.

6. Polariseur du type à réseau de diffraction biréfringent selon l'une quelconque des revendications précédentes, dans lequel les dimensions des régions à échange d'ion et les couches diélectriques sont sélectionnées en fonction de leurs indices de réfraction de sorte que le polariseur ne diffracte pas nettement la composante de rayon ordinaire de la lumière avec laquelle le polariseur est destiné être utilisé.
